Europäisches Patentamt

European Patent Office

Office européen des brevets

(19)

(11) Veröffentlichungsnummer: **0 260 327**
**B1**

(12) EUROPÄISCHE PATENTSCHRIFT

(45) Veröffentlichungstag der Patentschrift: **12.09.90**

(51) Int. Cl.⁵: **G 11 B 7/00**, G 11 B 7/09

(21) Anmeldenummer: **87901769.7**

(22) Anmeldetag: **05.02.87**

(86) Internationale Anmeldenummer:
**PCT/SU87/00017**

(87) Internationale Veröffentlichungsnummer:
**WO 87/04840 13.08.87 Gazette 87/18**

(54) OPTISCHE SPEICHERANORDNUNG.

(30) Priorität: **07.02.86 SU 3134134**
**07.02.86 SU 3134543**

(43) Veröffentlichungstag der Anmeldung:
**23.03.88 Patentblatt 88/12**

(45) Bekanntmachung des Hinweises auf die
Patenterteilung:
**12.09.90 Patentblatt 90/37**

(84) Benannte Vertragsstaaten:
**AT BE CH DE FR GB IT LI LU NL SE**

(56) Entgegenhaltungen:
**EP-A-0 051 339**
**DE-A-3 203 599**
**FR-A-2 222 718**
**GB-A-1 482 668**
**GB-A-2 151 066**
**US-A-4 074 282**

**PATENT ABSTRACTS OF JAPAN, Band 6, Nr.**
**156 (P-135)1034r, 17. August 1982; & JP-A-57 74**
**842 (MITSUBISHI DENKI K.K.) 11.05.1982**

(73) Patentinhaber: **INSTITUT PROBLEM**
**MODELIROVANIA V ENERGETIKE AKADEMII**
**NAUK UKRAINSKOI SSR**
**pr. Pobedy, 56**
**Kiev, 252680 (SU)**

(72) Erfinder: **PETROV, Vyacheslav Vasilievich**
**ul. Montazhnikov, 104**
**Kiev, 252069 (SU)**
Erfinder: **ANTONOV, Alexandr Alexandrovich**
**pr. Vernadskogo, 85-64**
**Kiev, 252142 (SU)**
Erfinder: **TOKAR, Alexandr Petrovich**
**pr. Korneichuka, 30-161**
**Kiev, 252205 (SU)**
Erfinder: **KRJUCHIN, Andrei Andreevich**
**ul. Juliusa Fuchika, 8-13**
**Kiev, 252049 (SU)**
Erfinder: **SKURIDIN, Vladimir Petrovich**
**ul. Semashko, 21-92**
**Kiev, 252142 (SU)**
Erfinder: **GORSHKOV, Nikolai Vasilievich**
**Leninsky pr., 52-416**
**Moscow, 117333 (SU)**
Erfinder: **KOVTUN, Valery Dmitrievich**
**ul. Otto Shmidta, 35/37-8**
**Kiev, 252107 (SU)**

**EP 0 260 327 B1**

Erfinder: **GAPCHENKO, Leonid Mikhailovich**
**ul. Tarasovskaya, 3a-16**
**Kiev, 252033 (SU)**
Erfinder: **VOZOVIK, Anton Vasilievich**
**ul. Zatonskogo, 1-9**
**Kamenets-Podolsky, 282900 (SU)**

(74) Vertreter: **Lehn, Werner, Dipl.-Ing. et al**
**Hoffmann, Eitle & Partner Patentanwälte**
**Arabellastrasse 4**
**D-8000 München 81 (DE)**

**Beschreibung**

Die vorliegende Erfindung betrifft Informationsspeichereinrichtungen und bezieht sich insbesondere auf optische Speicher gemäß dem Oberbegriff des Anspruchs 1.

Stand der Technik

Der Intellekt der Rechentechnik wird in bedeutendem Maße durch die Vollkommenheit externer Speicher bestimmt. Zur Zeit liegt wegen unvollkommener externer Speichereinrichtungen die reale Arbeitsgeschwindigkeit der elektronischen Rechner um 2 bis 3 Größenordnungen geringer als die des Rechenwerkes der elektronischen Rechner. Zu den wichtigsten technischen Kenndaten der externen Speichereinrichtungen gehören Speicherkapazität, Informationsaustauschgeschwindigkeit und Zuverlässigkeit der Informationsspeicherung. Im Vergleich mit magnetischen externen Speichereinrichtungen besitzen die externen optischen Speicher eine Reihe von Vorteilen, und zwar: größere Speicherkapazität, höhere Zuverlässigkeit bei der Informationsspeicherung, höhere Schreibdichte, weshalb die optischen externen Speicher aussichtsreicher als die externen magnetischen Speicher sind.

Es ist ein optischer Speicher (JEEE Spectrum, 1979, II, Nr. 2, p. 33—38) bekannt, der -optisch gekoppelt- eine Quelle modulierter kohärenter Strahlung, die aus einem Laser und einem Lichtmodulator besteht, einen beweglichen Informationsträger in Form einer hermetisch abgeschlossenen optischen Platte, auf deren Innenfläche der durchsichtigen Wände eine Aufzeichnungsschicht aufgetragen ist, und eine Informationsadressierungseinheit enthält.

Jedoch weist der genannte optische Speicher eine geringe Schreibsicherheit und -dichte auf. Die geringe Schreibsicherheit ist durch die geringe mechanische Festigkeit der hermetischen optischen Platte sowie durch Verformungen ihrer Arbeitsflächen bei Änderungen des atmosphärischen Druckes bedingt. Die geringe Schreibdichte ist auf eine unkonstante Oberflächen-Schreibdichte für Spuren verschiedenen Halbmessers sowie auf die geringe Auflösung eines sog. "trokkenen" Objektivs im beweglichen optischen Kopf zurückführen (dessen numerische Apertur nicht mehr als Eins sein kann).

GB—A—1 580 398 zeigt einen optischen Speicher, der -optisch gekoppelt- eine Quelle modulierter kohärenter Strahlung und einen zylindrischen Informationsträger mit einem Antrieb zu dessen Drehung enthält. Der zylindrische Informationsträger stellt einen steifen undurchsichtigen Zylinder dar, auf dessen Außenfläche eine Aufzeichnungsschicht aufgetragen und an dem mit Hilfe von Distanzringen ein durchsichtiger, verhältnismäßig dünner Außenschutzzylinder angeorndet ist. Hierbei rotiert während des Betriebs der Außenschutzzylinder zusammen mit dem steifen undurchsichtigen Zylinder. Zur Verhinderung von Verformungen des Außenschutzzylinders bei Änderung des atmosphärischen Druckes ist eine Verbindung des Innenraums eines solchen zylindrischen optischen Informationsträgers mit der Umgebung vorgesehen.

Dieser optische Speicher hat jedoch eine geringe Schreibdichte und- sicherheit. Die geringe Schreibdichte ist durch den Umstand bedingt, daß die für die Informationsaufzeichnung benutzte Aufzeichnungsschicht nur auf die Außenfläche des steifen undurchsichtigen Zylinders aufgebracht werden kann, sowie durch die Benutzung des "trockenen" Objektivs mit geringer numerischer Apertur. Die geringe Schreibsicherheit ist durch fehlende Isolierung des Innenraums des zylindrischen Informationsträgers von der Umgebung bedingt, weshalb ein derartiger Informationsträger bei Änderung seiner Temperaturbedingungen während des Betriebs gegenüber der Umgebungstemperatur "atmet". In diesem Fall wird in den Innenraum eine große Menge von Staub, Feuchte und anderen Fremdkörpern eingesaugt, welche sich auf der Oberfläche der Aufzeichnungsschicht absetzen, wodurch die Sicherheit beim Schreiben und Lesen von Informationen wesentlich herabgesetzt wird. Die Zuverlässigkeit des bekannten Speichers wird auch wegen Beschädigungen der Oberfläche des Schutzzylinders des beweglichen Informationsträgers während dessen schneller Drehung gesenkt.

GB—A—1 482 668 zeigt, daß bei einem optischen Speicher mit zylindrischem Informationsträger, zur relativen Axialverstellung von Informationsträger gegenüber Strahlungsquelle der Informationsträger statt der Strahlungsquelle axial verschoben werden kann.

GB—A—2 151 066 zeigt die Anordnung eines solchen Trägers in einem Behälter.

Offenbarung der Erfindung

Der vorliegenden Erfindung ist die Aufgabe zugrundegelegt, einen optischen Speicher zu schaffen, dessen konstruktive Ausführung es gestattet, die Fokussierungsschärfe des eine Information tragenden Strahlungsflusses unter gleichzeitiger Erhöhung der Schreibsicherheit bei erhöhter Schreibdichte zu verbessern.

Die gestellte Aufgabe wird dadurch gelöst, daß im optischen Speicher mit — optisch gekoppelt — einer Quelle modulierter kohärenter Strahlung und einen zylindrischen Informationsträger mit einem Antrieb zu dessen Drehung und mit einer Aufzeichnungsschicht, die auf das röhrenförmige Substrat des zylindrischen Informationsträgers aufgetragen ist und die in einem fest angebrachten zylindrischen Behälter angeordnet ist, in dessen Seitenwand ein Fenster vorgesehen ist, gemäß der Erfindung eine Linse in dem Fenster des fest angebrachten zylindrischen Behälters (3) zum Durchlassen eines Strahlungsflusses von der außerhalb des Behälters angebrachten Quelle der modulierten koherenten Strahlung und zur Fokussierung der Strahlung auf der Aufzeichnungsschicht unbeweglich befestigt ist, und der fest angebrachte zylindrische Behälter mit einem für den Strahlungsfluß durchsichtigen flüssigen oder gasförmigen Medium gefüllt ist, wobei die Länge des fest angebrachten zylindrischen behälters um mindestens ein zweifaches größer als die der Aufzeichnungsschicht ist, die auf das röhrenförmige Substrat des zylindrischen Informationsträgers, aufgetragen ist, der mit einem Antrieb zu seiner Axialverstellung versehen ist.

Eine solche Ausführung ds optischen Speichers gestattet durch Verwendung der unbeweglichen Linse es, das optische System besser zu justieren, wodurch eine erhöhte Fokussierungsschärfe des modulierten kohärenten Strahlungsfluses auf der Oberfläche der Aufzeichnungsschicht des zylindrischen Informationsträgers erzielt werden kann. Die Anordnung des zylindrischen Informationsträgers in dem fest angebrachten zylindrischen Behälter gewährleistet den Schutz dieses Trägers gegen Beschädigungen und Verunreinigungen und erhöht damit die Zuverlässigkeit bei der Informationsspeicherung. Die Folge der Anordnung der Linse in der Wand des fest angebachten zylindrischen Behälters ist, daß der zylindrische Informationsträger in bezug auf den unbeweglichen zylindrischen Behälter bei der Informationsaddressierung axial verschiebbar sein muß. Daher muß die Länge des Innenraums des zylindrischen Behälters gleich der doppelten Länge der Aufzeichnungsschicht des Informationstragers sein oder diese übersteigen.

Es ist zweckmäßig, daß beim Füllen des zylindrischen Behälter mit einem gasförmigen Medium als Antrieb zur Axialverstellung des zylindrischen Informationsträgers ein elektrischer Antrieb linearer Verschiebung verwendet wird, dessen unbeweglicher Teil an der Seitenwand des zylindrischen Behälters und dessen beweglicher Teil an mindestens einem der Stirnenden des zylindrischen beweglichen Informationsträgers angeordnet ist.

Es ist zweckdienlich, daß beim Füllen des zylindrischen Behälters mit einem flüssigen Medium als Antrieb zur Axialverstellung des zylindrischen Informationsträgers ein umkehrbarer Hydraulikantrieb benutzt ist, als dessen Kolben der zylindrische Informationsträger dient, dessen Zylinder der zylindrische Behälter bildet, während als Arbeitsflüssigkeit ein flüssiges Medium dient, als welches eine Immersionsflüssigkeit mit kleiner Zähigkeit zu verwenden ist.

Es ist wünschenswert, daß im Innenraum des zylindrischen Informationsträgers mindestens eine radiale Trennwand angeordnet ist.

Es ist von Vorteil, daß auf die Aufzeichnungsschicht auf dem Substrat des zylindrischen Informationsträgers eine Schutzschicht aufgetragen ist.

Dadurch, daß im optischen Speicher der zylindrische Informationsträger verwendet wird, der in den zylindrischen Behälter eingeschlossen ist, der mit der Immersionsflüssigkeit aufgefüllt ist, wird es möglich, die numerische Appertur des Objektivs zu vergrößern und damit die Fokussierungsschärfe des eine Information tragenden Strahlungsflusses auf der Aufzeichnungsschicht wesentlich zu verbessern. Dabei ist es bequem, zur Informationsaddressierung einen axialen Hydraulikantrieb zu vewenden. Durch Einführung undurchlässiger radialer Trennwände in den zylindrischen Informationsträger wird dessen hydraulischer Widerstand und der Wirkungsgrad des Hydraulikantriebs erhöht. Das Vorhandensein der Schutzschicht verlängert die Lebensdauer der Aufzeichnungsschicht des zylindrischen Informationsträgers in der Arbeitsflüssigkeit.

Kurzbeschreibung der Zeichnungen

Im weiteren wird die Erfindung an Hand von Ausführungsbeispielen unter Bezugnahme auf die beigefügten Zeichnungen näher erläutert. Es zeigen:

Fig. 1 eine Gesamtansicht des erfindungsgemäßen optischen Speichers im Schnitt;

Fig. 2 einen erfindungsgemaßen optischen Speicher mit einem Antrieb zur Axialverstellung des zylindrischen Informationsträgers, welcher Antrieb als elektrischer Antrieb linearer Verschiebung ausgeführt ist;

Fig. 3 einen erfindungsgemaßen optischen Speicher, bei dem der zylindrische Behälter mit einem flüssigen Medium gefüllt ist und als Antrieb zur Axialverstellung des zylindrischen Informationsträgers, der eine undurchlässige radiale Trennwand aufweist, ein umkehrbarer Hydraulikantrieb benutzt ist;

Fig. 4 dasselbe wie in Fig. 3, aber beim Vorhandensein von zwei undurchlässigen radialen Trennwänden.

Beste Ausführungsform der Erfindung

Der erfindungsgemäße optische Speicher enthält -optisch gekoppelt- eine Quelle 1 modulierter kohärenter Strahlung und einen zylindrischen Informationsträger 2, der in eiem fest angebrachten zylindrischen Behälter 3 Platz findet, der aus einem undurchsichtigen Material (einem Metall, Metallegierungen, einem Kunststoff) gefertigt ist. In der Seitenwand des zylindrischen Behälters 3 ist ein Fenster 4 ausgeführt, in dem eine Linse 5 zum Durchlaß eines Strahlungsflusses von der Quelle 1 modulierter kohärenter Strahlung unbeweglich befestigt ist, während der Innenraum des zylindrischen Behälters 3 mit einem gasförmigen Medium, z.B. Luft, gefüllt ist. An den Stirnenden des zylindrischen behälters 3 sind Öffnungen 6 ausgeführt, an die eine Leitung 7 samt einer umkehrbaren Pumpe 8 eines pneumatischen Antriebs angeschlossen ist, der im gegebenen Fall als Antrieb zur Axialverstellung des zylindrischen Informationsträgers 2 dient, während der letztere die Rolle des Kolbens des pneumatischen Antriebs spielt. Als Zylinder des Hydraulkantriebs wird der zylindrische Behälter 3 benutzt.

Der zylindrische Informationsträger 2 enthält ein für das Durchlassen des Strahlungsflusses von der Quelle 1 modulierter kohärenter Strahlung durchsichtiges röhrenförmiges Substrat 9, auf dessen Außen- und Innenfläche 10 bzw. 11 eine Aufzeichnungsschicht 12 aufgetragen ist.

(Möglich sind auch Varianten, bei denen die Aufzeichnungsschicht auf eine der Flächen 10 oder 11 des röhrenförmigen Substrats aufgetragen ist). Außerdem ist die Aufzeichnungsschicht 12 mit einer Schutzschicht 13 überzogen. Als Aufzeichnungsschicht 12 auf dem röhrenförmigen Substrat 9 kann z.B. eine Chalkogenidschicht benutzt werden, während als Schutzschicht 13 Metalloxide, z.B. Eisen(III)-oxid $Fe_2O_3$, dient.

An einer der Stirnseiten des röhrenförmigen Substrats 9 ist eine undurchlässige radiale Trennwand 14 befestigt, an der ein Läufer 15 eines Elektromotors zur Drehung des zylindrischen Informationsträgers 2 und der Ständer 16 des Elektromotors an der Seitenfläche des zylindrischen Behälters 3 angeordnet ist, wobei die Länge des zylindrischen Behälters 3 um mindestens ein zweifaches größer als die der Aufzeichnungsschicht 12 ist, die auf das röhrenförmige Substrat 9 aufgetragen ist.

Die Quelle 1 modulierter kohärenter Strahlung enthält -otpisch gekoppelt- einer Laser 17, einen optischen Modulator 18 und einen Polarisationslichtteiler 19. Der eine Ausgang des Polarisationslichtteilers 19 ist über eine Viertelwellenplatte 20 mit der Linse 5 optisch gekoppelt und der andere Ausgang des Polarisationslichtteilers 19 steht über eine Linse 21 mit einem Fotoempfänger 22 in optischer Verbindung.

Nun soll auf die Wirkungsweise des optischen Speichers eingegangen werden. In dem zylindrischen Behälter 3 wird der zylindrische Informationsträger 2 mit zuvor aufgebrachten Bezugsspuren und einer Dienstinformation untergebracht, die auf den Informationsspuren geschrieben ist. Dann wird an die Öffnungen 6 an den Stirnenden des unbeweglichen zylindrischen Behälters 3 die Leitung 7 des Pneumatikantriebs für die Axialverstellung des zylindrischen Informationsträgers 2 angeschlossen. Danach ist der optische Speicher betriebsbereit. Beim Betrieb des optischen Speichers wird der Informationsträger 2 vom Elektromotor auf die vorgegebene Drehzahl angetrieben, und die Quelle 1 modulierter kohärenter Strahlung sendet einen nichtmodulierten Strahlungsfluß verminderter Leistung aus, der dem Lesebetrieb entspricht. Der vom zylindrischen Informationstrager 2 reflektierte Strahlungsfluß wird nach der Intensität der Dienstinformation moduliert, die auf der unter der Linse 5 befindlichen Informationsspur geschrieben ist. Der reflektierte Strahlungsfluß ändert durch den zweifachen Durchlauf (im Hin- und Rücklauf) der Viertelwellenplatte 20 seine Polarisationsbene um 90° und trifft dadurch auf den Fotoempfänger 22 auf. Im Fotoempfänger 22 wird das optische Signal in ein elektrisches Signal umgewandelt, das einer Steuereinheit (der Einfachheit halber nicht gezeigt) zugeführt wird. In der Steuereinheit wird aus der gelesenen Dienstinformation eine Information abgetrennt, die der Nummer einer Informationsspur zugeordnet ist, die sich unter dem Strahlungsfluß befindet. Diese Information wird mit der Nummer der Informationsspur verglichen die der gegebenen Adresse entspricht. Nachher schickt die Steuereinheit an den Pneumatikantrieb zur Axialverstellung des Informationsträgers 2 einen Befehl, durch den zu der vorgegebenen Informationsspur übergegangen wird. Da die Linse 5 am Behälter 3 unbeweglich befestigt ist, wird die Informationsadressierung im zu behandelnden Speicher durch die Axialverstellung des zylindrischen Informationsträgers 2 relativ zum zylindrischen Behälter 3 gewährleistet. Deshalb muß Länge des Innenraums dieses Behälters gleich oder größer als die doppelte Länge der Aufzeichnungsschicht 12 des zylindrischen Aufzeichnungsträgers 2 sein. Nötigenfalls wird auch ein Befehl geliefert, durch den der Strahlungsfluß von der auf die Außenfläche 10 des durchsichtigen röhrenförmigen Substrats 9 aufgetragenen Aufzeichnungsschicht 12 auf die auf die Innenfläche 11 des Substrats aufgetragene Aufzeichnungsschicht 12 oder umgekehrt umfokussiert wird. Wenn die Steuereinheit feststellt, daß sich unter dem Strahlungsfluß die vorgegebene Informationsspur befindet, beginnt die Abtrennung von Daten aus der gelesenen Dienstinformation, welche der Nummer eines Sektors zugeordnet sind, der sich unter der Linse 5 befindet. Nachdem die Steuereinheit den Zeitpunkt ermittelt hat, in dem der Strahlungsfluß zu der gegebenen Adresse gebracht ist, erfolgt im Lesebetribe das Lesen der von der Steuereinheit angeforderten Information, im Schreibbetrieb aber das Schreiben der aus der Steuereinheit kommende Information. Dazu gelangt im Schreibbetrieb das aufzuzeichnende Signal zum optischen Modulator 18, mit dessen Hilfe der Strahlungsfluß des Lasers 17 nach der Intensität oder auf andere Art und Weise moduliert wird. Da in dem behandelten optischen Speicher die Linse 5, durch die der Strahlungsfluß auf die Aufzeichnungsschicht 12 auftrifft, am fest angebrachten zylindrischen Behälter 3 umbeweglich befestigt ist, kann das optische System mit höher Genauigkeit justiert werden, wodurch seine Fokussierung verbessert wird.

Darüber hinaus schützt der zylindrische Behälter 3 den Informationsträger 2 gegen Verunreinigungen und Beschädigungen. Der Schutz des zylindrischen Informationsträgers 2 gegen Verunreinigungen wird durch die Hermetisierung des pneumatischen Systems gewährleistet. All dies erhöht die Schreib- und Lesesicherheit beim erfindungsgemäßen optischen Speicher.

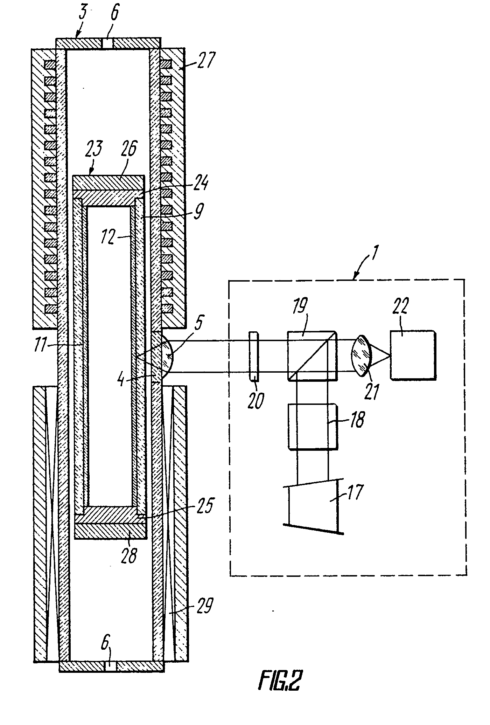

Denkbar ist eine Ausführungsform des optischen Speichers, bei der der zylindrische Informationsträger 23 (Fig. 2) hermetisch ausgeführt ist, wozu an den Stirnenden des röhrenförmigen Substrates 9 zwei undurchlässige radiale Trennwände 24 und 25 befestigt sind.

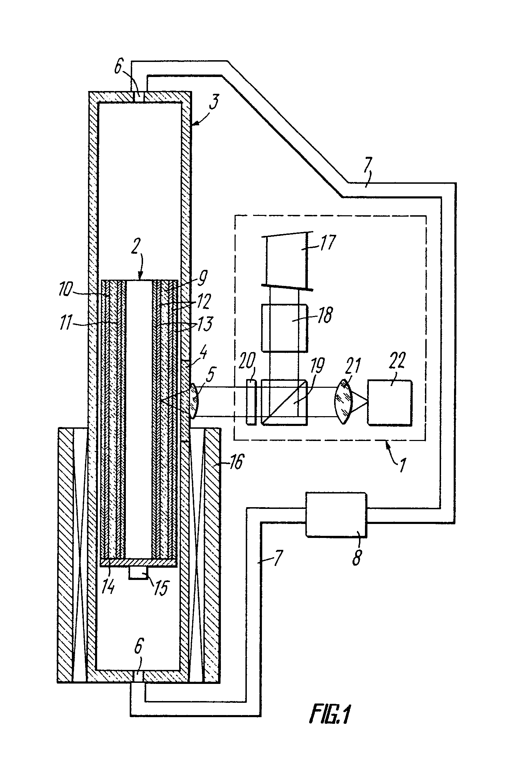

Bei dieser Ausführungsform des Speichers wird die Aufzeichnungsschicht 12 auf nur die Innenfläche des für den von der Quelle 1 ausgesandten Strahlungsfluß durchsichtigen röhrenförmigen Substrates 9 aufgetragen. An der Trennwand 24 ist ein beweglicher Teil 26 eines elektrischen Antriebs linearer Verschiebung befestigt, dessen feststehender Teil 27 an der Seitenfläche des zylindrischen Behälters 3 befestigt ist, wobei der elektrische Antrieb linearer Verschiebung als Antrieb zur Axialverstellung des zylindrischen Informationsträgers 23 dient. An der Trennwad 25 ist ein Läufer 28 eines Elektromotors befestigt, diese Stander 29 der Seitenfläche des zylindrischen Behälters 3 ebenfalls befestigt ist und den Läufer 28 umgibt. Dieses Elektromotor dient als Drehantrieb des Informationsträgers 23. An den Stirnenden des zylindrischen behälters 3 sind ebenfalls Öffnungen 6 vorgesehen, im gegebenen Fall werden sie jedoch zum Lufteintritt und -austritt bei axialen Bewegungen des zylindrischen Informationsträgers 23 benutzt. Im übrigen ist die Bauart des in Fig. 2 gezweigten optischen Speichers ähnlich der des in Fig. 1 dargestellten optischen Speichers.

Dadurch, daß die Aufzeichnungsschicht 12 auf nur die Innenfläche 11 des durchsichtigen röhrenförmigen Substrates 9 aufgetragen ist, erübrigen sich beim Betrieb des in Fig. 2 gezeigten optischen Speichers Befehle, mit denen zu der anderen Aufzeichnungsschicht übergegangen wird. Im übrigen ist die Arbeitsweise der beschriebenen Ausführungsform des optischen Speichers analog der des in Fig. 1 gezeigten Speichers.

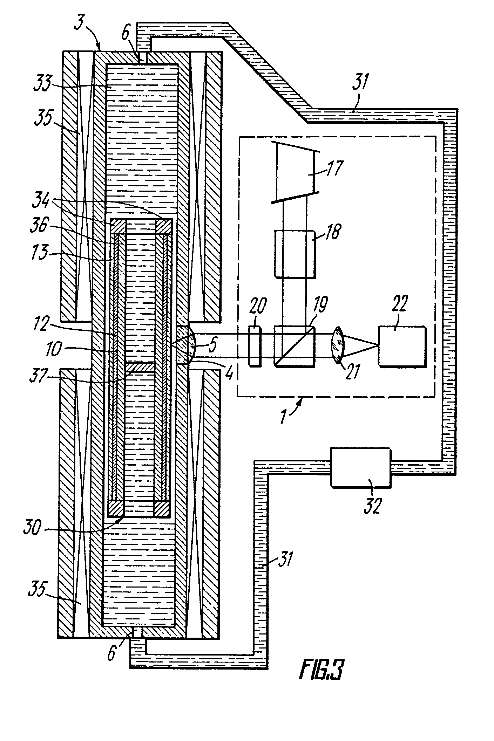

Es ist eine Ausführungsform des erfindungsgemäß vorgeschlagenen optischen Speichers möglich, bei der ein umkehrbarer Hydraulikantrieb zur Axialverstellung des zylindrischen Informationsträgers 30 (Fig. 3) verwendet wird. In diesem Fall wird an den zylindrischen Behälter 3 über die Offnungen 6 an dessen Strinenden eine Leitung 31 mit einer umkehrbaren Hydraulikpumpe 32 des umkehrbaren Hydraulikantriebs angeschlossen, wobei der zylindrische Behälter 3 selbst, an dessen Seitenfläche die Linse 5 befestigt ist, mit einer Flüssigkeit, z.B. einer Immersionsflüssigkeit 33 mit geringer Zähigkeit gefüllt ist. Innerhalb des zylindrischen Behälters 3 ist ein zylindrischer Informationsträger 30 untergebracht, an dessen Stirnseiten Läufer 30 eines Elektromotors zur Drehung des zylindrischen Informationssträgers 30 angebracht sind, dessen Ständer 35 an der Seitenwand des zylindrischen Behälters 3 eingebaut sind und jeder von diesen Ständern seinen eigenen Läufer 34 umgibt.

Auf der Außenfläche 10 des für den von der Quelle 1 modulierter kohärenter Strahlung ausgesandten Strahlungsfluß undurchsichtigen röhrenförmigen Substrates 36 ist eine Aufzeichnungsschicht 12 und eine Schutzschicht 13 aufgetragen, und im Innenraum des röhrenförmigen Substrates 36 ist eine undurchlässige radiale Trennwand 37 angeordnet. Die Länge des zylindrischen behälters 3 ist wie auch bei den vorhergehenden Ausführungsformen um mindestens ein zweifaches größer als die der Aufzeichnungsschicht 12, die auf das röhrenförmige Substrat 36 aufgetragen ist. Die Quelle 1 modulierter kohärenter Strahlung ist ebenso wie beim optischen Speicher nach Fig. 1 ausgeführt. Außerdem wird bei dieser Ausführungsform die Immersionsflüssig-

keit 33 als Arbeitsflüssigkeit im umkehrbaren Hydroantrieb zur Axialverstellung des zylindrischen Informationsträgers 30 verwendet, in welchem als Kolben der zylindrische Informationsträger 30 selbst, als Zylinder aber der zylindrische Behälter 3 dient.

Der angemeldete Speicher arbeitet wie folgt.

Im Schreibbetrieb wird auf die Aufzeichnungsschicht 12 des hermetische abgeschlossenen Informationsträgers 30 mit Hilfe der Linse 5 ein mit dem zu schreibenden Signal durchmodulierter Strahlungsfluß (im sichtbaren oder nahen Infrarotbereich) abgebildet, mit dem gerade das Schreiben der Information auf der gegebenen Adresse durchgeführt wird. Die Informationsaddressierung wird durch die Drehung des zylindrischen Informationsträgers 30 um dessen Achse im Inneren des unbeweglichen zylindrischen Behälters 3 sowie durch die Verstellung dieses Trägers in axialer Richtung unter der Einwirkung des umkehrbaren Hydraulikantriebs axialer Verschiebung gewährleistet.

Im Lesebetrieb wird auf den zylindrischen Informationsträger 30, dessen Arbeitsverstellung ebenso gleich wie im Schreibbetrieb erfolgt, mit Hilfe der Linse 5 ein nichtmodulierter, in der Intensität mit Hilfe des optischen Modulators geschwächter Strahlungsfluß abgebildet. Ein mit dem auf dem zylindrischen Informationsträger 30 aufgezeichneten Signal durchmodulierter reflektierter Strahlungsfluß gelangt zum Fotoempfänger 22, in dem dieser Strahlungsfluß in ein elektrisches Wiedergabesignal umgewandelt wird.

Durch das Füllen des zylindrischen Behälters 3, in dem der zylindrische Informationsträger 30 untergebracht ist, mit der Immersionsflüssigkeit 33 mit geringer Viskosität wird es möglich, die numerische Apertur der Linse 5 zu vergrößern. Dadurch wird die Fokussierungsschärfe des auf die Aufzeichnungsschicht 12 fallenden Strahlungsflusses verbessert und damit die Schreibdichte erhöht.

Da in der behandelten Ausführungsform der zylindrische Informationsträger 30 im flüssigen Medium 33 mit geringer Viskosität gedreht wird, das in einem beträchtlich geringeren Maße als die Luft komprimiert werden kann, werden seine radiale Schläge während der Drehung wesentlich verringert werden. Dadurch wird eine zusätzliche Erhöhung der Fokussierungsschärfe des Strahlungsflusses erzielt.

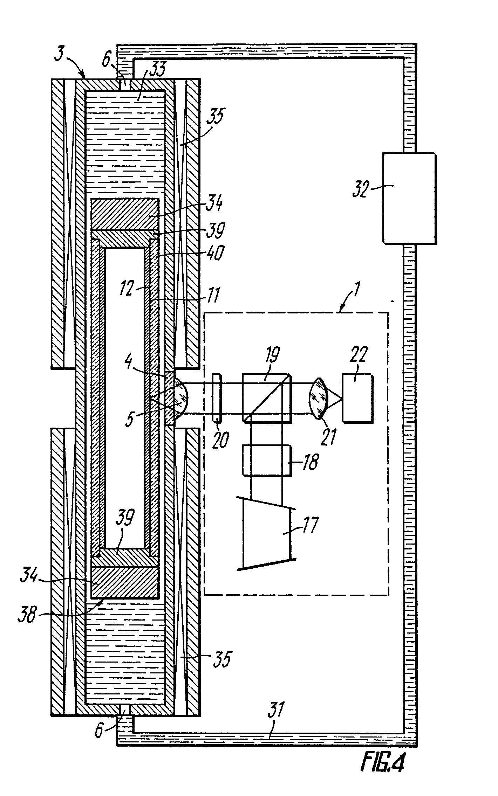

Der erfindungsgemäße Speicher kann eine weitere Ausführungsform haben, bei der der zylindrische Informationsträger 38 (Fig. 4) mit zwei undurchlässigen radialen Trennwänden 39 ausgeführt ist, die an den Stirnenden 38 des durchsichtigen röhrenförmigen Substrates 40 angebracht sind, auf dessen Innenfläche die Aufzeichnungsschicht 12 aufgetragen ist.

Im übrigen ist die Bauart des optischen Speichers nach Fig. 4 analog der des in Fig. 3 gezeigten Speichers. Eine solche Ausführung des zylindrischen Informationsträgers 38 ermöglicht eine Erhöhung der Schreibdichte, weil die Aufzeichnungsschicht 12 keiner Einwirkung der Immersionsflüssigkeit 33 unterzogen wird. Darüber hinaus bleiben eventuelle Verunreinigungen der Äußenfläche 10 des röhrenförmigen Substrates 40 außerhalb des Brennpunktes der Linse 5 liegen und üben daher auf die Arbeit des optischen Speichers praktisch keinen Einfluß.

Somit gewährleistet der optische Speicher, dessen mögliche Ausführungsformen oben beschrieben wurden, eine erhöhte Fokussierungsschärfe des eine Information tragenden Strahlungsflusses unter entsprechender Erhöhung der Schreibdichte sowie eine erhöhte Schreibsicherheit.

Gewerbliche Anwendbarkeit

Die vorliegende Erfindung kann in der Rechentechnik in Geräten zur Bild- und Schallaufzeichnung und in Systemen zur Informationsspeicherung und- verarbeitung, insbesondere in externen Speichern elektronischer Rechner verwendet werden.

**Patentansprüche**

1. Optischer Speicher mit — optisch gekoppelt —

einer Quelle (1) modulierter kohärenter Strahlung und

einem zylindrischen Informationsträger (2, 23, 30, 38) mit einem Antrieb zu dessen Drehung und mit einer Aufzeichnungsschicht (12), die auf das röhrenförmige Substrat (9, 36) des zylindrischen Informationsträgers (2, 23, 30, 38) aufgetragen ist und die in einem fest angebrachten zylindrischen Behälter (3) angeordnet ist, in dessen Seitenwand ein Fenster (4) vorgesehen ist, dadurch gekennzeichnet, daß

eine Linse (5) in dem Fenster (4) des fest angebrachten zylindrischen Behälters (3) zum Durchlassen eines Strahlungsflusses von der außerhalb des Behälters angebrachten Quelle (1) der modulierten koherenten Strahlung und zur Fokussierung der Strahlung auf der Aufzeichnungsschicht unbeweglich befestigt ist, und

der fest angebachte zylindrische Behälter (3) mit einem für den Strahlungsfluß durchsichtigen flüssigen oder gasförmigen Medium gefüllt ist, wobei die Länge des fest angebrachten zylindrischen behälters (3) um mindestens ein zweifaches größer als die der Aufzeichnungsschicht (12) ist, die auf das röhrenförmige Substrat (9, 36) des zylindrischen Informationsträgers (2, 23, 30, 38) aufgetragen ist, der mit einem Antrieb zu seiner Axialverstellung versehen ist.

2. Optischer Speicher nach Anspruch 1, dadurch gekennzeichnet, daß bei Füllen des fest angebrachten zylindrischen Behälters (3) mit einem gasförmigen Medium als Antrieb zur Axialverstellung des zylindrischen Informationsträgers (23) ein elektrischer Antrieb linearer Verschiebung verwendet wird, dessen unbeweglicher Teil (27) an der Seitenwand des fest angebrachten zylindrischen Behälters (3) und dessen beweglicher Teil (26) an mindestens einem der Stirnenden des zylindrischen beweglichen Informationsträgers (23) angeordnet ist.

3. Optischer Speicher nach Anspruch 1, dadurch gekennzeichnet, daß beim Füllen des fest angebrachten zylindrischen Behälters (3) mit einem flüssigen Medium als Antrieb zur Axialverstellung des zylindrischen Informationsträgers (30, 38) ein umkehrbarer Hydraulikantrieb benutzt ist, als dessen Kolben der zylindrische Informationsträger (30, 38), als dessen Zylinder der fest angebrachte zylindrische Behälter (3) und als Arbeitsflüssigkeit das flüssige Medium dient.

4. Optischer Speicher nach Anspruch 3, dadurch gekennzeichnet, daß als flüssiges Medium eine Immersionsflüssigkeit (33) mit geringer Viskosität benutzt ist.

5. Optischer Speicher nach Ansprüchen 1, 2, dadurch gekennzeichnet, daß im Innenraum des zylindrischen Informationsträgers (2, 23, 30, 38) mindestens eine undurchlässige radiale Trennwand (14, 24, 25, 37) angeordnet ist.

6. Optischer Speicher nach Ansprüchen 1, 3 und 5, dadurch gekennzeichnet, daß auf die Aufzeichnungsschicht (12) des röhrenförmigen Substrates (9, 40) des zylindrischen Informationsträgers (2, 23, 30, 36) eine Schutzschicht (13) aufgetragen ist.

**Revendications**

1. Mémoire optique avec, en couplage optique, une source (1) d'un rayonnement cohérent modulé et

un support cylindrique de l'information (2, 23, 30, 38) avec un entraînement pour sa rotation et avec une couche d'enregistrement (12) qui est supportée sur le substrat tubulaire (9, 36) du support cylindrique de l'information (2, 23, 30, 38) et qui se trouve dans un récipient cylindrique (3) stationnaire dans la paroi latérale duquel est prévue une fenêtre (4), caractérisée en ce que

une lentille (5) est fixée dans la fenêtre (4) du récipient cylindrique stationnaire (3) pour la passage d'un flot de rayonnement de la source (1) prévue à l'extérieur du récipient du rayonnement cohérent modulé et pour la focalisation du rayonnement sur la couche d'enregistrement, et le récipient cylindrique stationnaire (3) est rempli d'un fluide liquide ou gazeux transparent au flot du rayonnement, et la longueur du récipient cylindrique stationnaire (3) est égale au moins au double de celle de la couche d'enregistrement (12), qui est supportée sur le substrat tubulaire (9, 36) du support cylindrique de l'information (2, 23, 30, 38), qui est pourvu d'un entraînement pour son déplacement axial.

2. Mémoire optique selon la revendication 1, caractérisée en ce que, lors du remplissage du récipient cylindrique stationnaire (3) par un fluide gazeux, on utilise, en tant qu'entraînement pour le déplacement axial du support cylindrique de l'information (23), un entraînement électrique à déplacement linéaire dont la partie immobile (27) est agencée sur la paroi latérale du récipient cylindrique stationnaire (3) et dont la partie mobile (26) est agencée au moins à l'une des extrémités frontales du support cylindrique mobile de l'information (23).

3. Mémoire optique selon la revendication 1, caractérisée en ce que, lors du remplissage du récipient cylindrique stationnaire (3) au moyen d'un fluide liquide en tant qu'entraînement pour le déplacement axial du support cylindrique de l'information (30, 38), on utilise un entraînement hydraulique réversible dont le piston est formé du support cylindrique de l'information (30, 38) et dont le cylindre est formè du récipient cylindrique stationnaire (3) et en tant que fluide de travail, on utilise le fluide liquide.

4. Mémoire optique selon la revendication 3, caractérisée en ce qu'on utilise comme fluide liquide, un liquide d'immersion (33) de faible viscosité.

5. Mémoire optique selon l'une des revendications 1, 3, caractérisée en ce que dans l'espace interne du support cylindrique de l'information (2, 23, 30, 38) est agencée au moins une paroi radiale non transparente de séparation (14, 24, 25, 37).

6. Mémoire optique selon les revendications 1, 3 et 5, caractérisée en ce que sur la couche d'enregistrement (12) du substrat tubulaire (9, 40) du support cylindrique de l'information (2, 23, 30, 36) est supportée une couche de protection (13).

**Claims**

1. An optical memory having — optically coupled —
   a source (1) of modulated coherent radiation, and
   a cylindrical information carrier (2, 23, 30, 38) with a drive for rotating it and with a recording layer (12) which is applied to the tubular substrate (9, 36) of the cylindrical information carrier (2, 23, 30, 38) and which is arranged in a firmly mounted cylindrical container (3) in whose side wall a window (4) is provided,
   characterised in that
   a lens (5) is stationarily fixed in the window (4) of the firmly mounted cylindrical container (3) in order to allow the passage of a radiant flux from the source (1) — arranged outside the container — of the modulated coherent radiation, and in order to focus the radiation on the recording layer, and
   the firmly mounted cylindrical container (3) is filled with a fluid or gaseous medium which is transparent to the radiant flux, the length of the firmly mounted cylindrical container (3) being at least as great as that of the recording layer (12) which is applied to the tubular substrate (9, 36) of the cylindrical information carrier (2, 23, 30, 38) which is provided with a drive for its axial displacement.

2. An optical memory according to Claim 1, characterised in that, when filling the firmly mounted cylindrical container (3) with a gaseous medium, an electric drive of linear displacement is used as a drive for axially displacing the cylindrical information carrier (23), the stationary part (27) of this drive being arranged on the side wall of the firmly mounted cylindrical container (3) and the movable part (26) thereof being arranged on at least one of the head ends of the cylindrical movable information carrier (23).

3. An optical memory according to Claim 1, characterised in that, when filling the firmly mounted cylindrical container (3) with a fluid medium, a reversible hydraulic drive is used as a drive for axially displacing the cylindrical information carrier (30, 38), the cylindrical information carrier (30, 38) serving as the piston for the hydraulic drive and the firmly mounted cylindrical container (3) serving as the cylinder thereof and the fluid medium serving as the working fluid.

4. An optical memory according to Claim 3, characterised in that a low-viscosity immersion fluid (33) is used as the fluid medium.

5. An optical memory according to Claims 1, 3, characterised in that at least one impermeable radial partition (14, 24, 25, 37) is arranged in the inner chamber of the cylindrical information carrier (2, 23, 30, 38).

6. An optical memory according to Claims 1, 3 and 5, characterised in that a protective layer (13) is applied to the recording layer (12) of the tubular substrate (9, 40) of the cylindrical information carrier (2, 23, 30, 36).

FIG.1

FIG.2

FIG.3

EP 0 260 327 B1

FIG.4

4